(19) Europäisches Patentamt
European Patent Office
Office européen des brevets

(11) **EP 4 718 518 A1**

(12) **EUROPEAN PATENT APPLICATION**

(43) Date of publication:
01.04.2026 Bulletin 2026/14

(21) Application number: 25203001.0

(22) Date of filing: 18.09.2025

(51) International Patent Classification (IPC):
*H01M 4/133* (2010.01)     *C01B 32/21* (2017.01)
*H01M 4/1393* (2010.01)     *H01M 4/587* (2010.01)
*H01M 10/0525* (2010.01)

(52) Cooperative Patent Classification (CPC):
H01M 4/133; C01B 32/21; H01M 4/1393;
H01M 4/587; H01M 10/0525

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.09.2024 KR 20240130049

(71) Applicant: SAMSUNG SDI CO., LTD.
Yongin-si, Gyeonggi-do 17084 (KR)

(72) Inventor: YOUM, Chul
17084 Yongin-si (KR)

(74) Representative: Maiwald GmbH
Elisenhof
Elisenstraße 3
80335 München (DE)

(54) **NEGATIVE ELECTRODE ACTIVE MATERIAL FOR RECHARGEABLE LITHIUM BATTERY, NEGATIVE ELECTRODE INCLUDING THE SAME, AND PREPARATION METHOD OF THE SAME**

(57) A negative electrode active material, a negative electrode for a rechargeable lithium battery including the same, and a method for preparing the same are provided. A negative electrode active material includes a carbon-based material, and a surface modifier on a surface of the carbon-based material, where the surface modifier includes a polar functional group, and the polar functional group contains at least one of a carboxyl group, an amine group, a thiol group, and/or a combination thereof.

EP 4 718 518 A1

**Description**

## BACKGROUND

The present disclosure herein relates to a negative electrode active material for a rechargeable lithium battery, a negative electrode including the negative electrode active material, and a preparation method of the negative electrode , and for example, to a negative electrode active material having a surface modified, a negative electrode including the negative electrode active material, and a preparation method of the negative electrode.

Recently, with the rapid proliferation of battery-utilizing electronic devices, such as mobile phones, laptop computers, and/or electric vehicles, demand for a rechargeable battery with high energy density and high capacity has rapidly increased. Consequently, research and development has been actively conducted to enhance (e.g., improve) the performance of the rechargeable lithium battery.

The rechargeable lithium battery includes a positive electrode and a negative electrode containing active materials capable of intercalation and deintercalation of lithium ions, and an electrolyte solution. Electrical energy is produced by oxidation and reduction reactions if (e.g., when) the lithium ions are intercalated and deintercalated into/from the positive electrode and the negative electrode.

## SUMMARY

One or more aspects of the present disclosure are directed toward a negative electrode active material having improved bonding force with an electrode current collector, electrical conductivity, and wettability with an electrolyte solution.

One or more aspects of the present disclosure are directed toward a negative electrode for a rechargeable lithium battery having improved conductivity, and moisture retention of an electrolyte solution.

One or more aspects of the present disclosure are directed toward a preparation method of a negative electrode for a rechargeable lithium battery with improved processability.

Additional aspects will be set forth in part in the description which follows and, in part, will be apparent from the description, or may be learned by practice of the presented embodiments of the disclosure.

**In** one or more embodiments of the present disclosure, a negative electrode active material includes a carbon-based material, and a surface modifier on a surface of the carbon-based material. The surface modifier may include a polar functional group, and the polar functional group may include at least one of a carboxyl group, an amine group, a thiol group, and/or a (e.g., any suitable) combination thereof.

**In** one or more embodiments of the present disclosure, a negative electrode for a rechargeable lithium battery includes a negative electrode current collector, and a negative electrode active material layer arranged on the negative electrode current collector and containing a negative electrode active material. The negative electrode active material may include a surface modifier, and the surface modifier may bond the negative electrode active material to a surface of the negative electrode current collector through at least one of sulfur (S), nitrogen (N), and/or a (e.g., any suitable) combination thereof as a medium.

In one or more embodiments of the present disclosure, a preparation method of a negative electrode for a rechargeable lithium battery includes preparing a negative electrode current collector, preparing a negative electrode active material, and forming a negative electrode active material layer containing the negative electrode active material on the negative electrode current collector. The preparing of the negative electrode active material may include soaking a carbon-based material in a first solution to perform a first surface modification, and soaking the first surface-modified carbon-based material in a second solution to perform a second surface modification, the first solution may be an acid solution, and the second solution may include at least one of an amine-based compound, a thiol-based compound, and/or a (e.g., any suitable) combination thereof.

## BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a simplified conceptual diagram illustrating a rechargeable lithium battery according to one or more embodiments of the present disclosure;

FIGS. 2-5 are schematic views each illustrating a rechargeable lithium battery according to one or more embodiments, FIG. 2 shows a cylindrical battery, FIG. 3 shows a prismatic battery, and FIGS. 4 and 5 show pouch-type (kind) batteries;

FIG. 6 is a cross-sectional view of a negative electrode active material according to one or more embodiments of the present disclosure;

FIG. 7 is a conceptual diagram illustrating chemical interaction between a negative electrode active material and a negative electrode current collector according to one or more embodiments of the present disclosure;

FIGS. 8 and 9 are cross-sectional views each illustrating a negative electrode for a rechargeable lithium battery according to one or more embodiments of the present disclosure;

FIGS. 10-12 are schematic views each illustrating a preparation method of a negative electrode active material according to one or more embodiments of the present disclosure;

FIG. 13 is a cross-sectional view of a negative electrode active material prepared according to one or more embodiments of disclosure; and

FIGS. 14 and 15 are schematic views each illustrating a preparation method of a negative electrode active material layer according to one or more embodiments of the present disclosure.

## DETAILED DESCRIPTION

Hereinafter, embodiments of the present disclosure will be described clearly and in more detail to such an extent that those skilled in the art easily implement the present disclosure. In order to fully understand the configuration and effect of the present disclosure, one or more embodiments of disclosure will be described in more detail in more detail with reference to the accompanying drawings. It should be noted, however, that the present disclosure is not limited to the following example embodiments, and may be implemented in one or more suitable forms. Rather, these example embodiments are provided, so that the present disclosure will be thorough and complete, and will fully convey the scope of the present disclosure to those skilled in the art to which the present disclosure pertains.

In this specification, it will be understood that, if (e.g., when) an element is referred to as being on another element, the element may be directly on the other element, or intervening elements may be present therebetween. In contrast, if (e.g., when) an element is referred to as being "directly on" another element, there are no intervening elements present. In the drawings, thicknesses of components are exaggerated for effectively explaining the technical contents. Like reference numerals or symbols refer to like elements throughout, and duplicative descriptions thereof may not be provided the specification.

Unless otherwise specially noted in this description, the expression of singular form (e.g., "a," "an," and/or "the") may include the plural form, including "at least one," unless the context clearly dictates otherwise. In addition, unless otherwise specially noted, the phrase "A or B" may indicate "A but not B", "B but not A", and "A and B". The terms "comprise/include/have", "comprises/includes/has", and/or "comprising/including/having" utilized in this description, are intended to designate the presence of an embodied aspect, number, step (e.g., act or task), element, and/or a (e.g., any suitable) combination thereof, and do not preclude or exclude the presence or addition of one or more other features, numbers, steps (e.g., acts or tasks), elements, components, and/or a (e.g., any suitable) combination thereof. Additionally, the terms "comprise(s)/comprising," "include(s)/including," "have/has/having", or other similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers, and/or sections should not be limited by these terms. These terms are only utilized to distinguish one element, component, region, layer or section from another element, component, region, layer, or section. Thus, a first element, component, region, layer, or section described herein may be termed a second element, component, region, layer, or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical, and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical, or electrical properties of the semiconductor film.

Further, in this specification, the phrase "on a plane," or "plan view," indicates viewing a target portion from the top, and the phrase "on a cross-section" indicates viewing a cross-section formed by vertically cutting a target portion from the side.

In this specification, "combination thereof" may refer to a mixture, a stack, a composite, a copolymer, an alloy, a blend, and a reaction product of components.

In this specification, the phrases such as "A or B", "at least one among A and B", "at least one of A or B", "A, B, or C", "at least one among A, B, and C", and "at least one of A, B, or C" may each include any one of the items listed together in the corresponding phrase, among the phrases, or any possible combination thereof.

The term "particle diameter", "particle size", and/or the like as utilized herein refers to an average diameter of particles if (e.g., when) the particles are spherical, and refers to an average major axis length of particles if (e.g., when) the particles are non-spherical. For example, a particle diameter may be an average particle diameter. In some embodiments, the particle diameter refers to an average particle diameter ($D_{50}$) which refers to a diameter of particles at a cumulative volume of about 50 volume % in a particle size distribution. The average particle diameter ($D_{50}$) may be measured by a method widely suitable to those skilled in the art, for example, may be measured by a particle size analyzer, or may also be measured utilizing a transmission electron microscope (TEM) image, or a scanning electron microscope (SEM) image. In one or more embodiments, the average particle diameter is measured by a measuring device utilizing dynamic light-scattering, where the number of particles is counted for each particle size range by performing data analysis, and an average particle diameter ($D_{50}$) value may then be obtained by calculation therefrom. Also, the average particle diameter may be measured utilizing a laser diffraction/scattering method. If (e.g., when) measured by the laser diffraction method, specifically, after dispersing particles to be measured in a dispersion medium (e.g., a dispersion solvent), the dispersion medium is introduced into a commercial laser diffraction particle size measurement instrument (e.g., Microtrac MT 3000) and irradiated with ultrasonic waves of about 28 kHz at an output of about 60 W, and the average particle diameter ($D_{50}$) based on about 50% of particle size distribution in the measurement instrument may then be calculated.

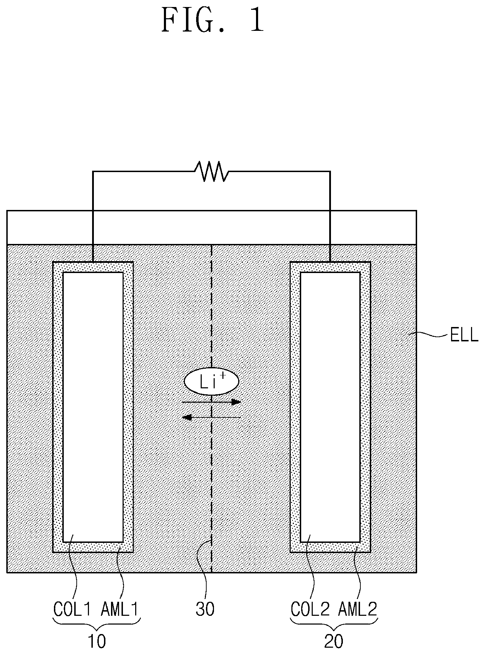

FIG. 1 is a simplified conceptual diagram illustrating a rechargeable lithium battery according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 and/or the negative electrode 20.

## Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and may further include a binder and/or a conductive material (e.g., an electrically conductive material, e.g., an electron conductor).

For example, the positive electrode 10 may further include an additive that may serve as a sacrificial positive electrode.

An amount of the positive electrode active material in the positive electrode active material layer AML1 may be about 90 wt% to about 99.5 wt% based on 100 wt% of the positive electrode active material layer AML1. An amount of each of the binder and the conductive material may be about 0.5 wt% to about 5 wt% based on a total weight (100 wt%) of the positive electrode active material layer AML1.

The binder serves to attach the positive electrode active material particles well to each other and also to attach the positive electrode active material well to the current collector COL1. Non-limiting examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like.

The conductive material may be utilized to impart conductivity (e.g., electrical conductivity) to the electrode. Any material that does not cause chemical change (e.g., does not cause an undesirable chemical change in the rechargeable lithium battery) and conducts electrons may be utilized in the battery. Non-limiting examples of the conductive material may include a carbon-based material, such as natural graphite, artificial graphite, carbon black, acetylene black, Ketjen black, a carbon fiber, a carbon nanofiber, and carbon nanotube; a metal-based material containing copper, nickel, aluminum, silver, and/or the like in a form of a metal powder or a metal fiber; a conductive polymer, such as a polyphenylene derivative; and/or a (e.g., any suitable) mixture thereof.

Aluminum (Al) may be utilized as a material of the current collector COL1, but the material is not limited thereto.

## Positive Electrode Active Material

The positive electrode active material in the positive electrode active material layer AML1 may include a compound (e.g., a lithiated intercalation compound) that may be capable of reversibly intercalating and deintercalating lithium. For example, at least one of a composite oxide of lithium and/or a metal selected from among cobalt, manganese, nickel, and/or one or more (e.g., any suitable) combinations thereof may be utilized.

The composite oxide may be a lithium transition metal composite oxide. Suitable examples of the composite oxide may include lithium nickel-based oxide, lithium cobalt-based oxide, lithium manganese-based oxide, lithium iron phosphate-based compound, cobalt-free nickel-manganese-based oxide, and/or a (e.g., any suitable) combination thereof.

In one or more embodiments, the following compound(s) represented by at least one of (e.g., at least one selected from among) the following chemical formulas may be utilized: $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); and/or $Li_aFePO_4$ ($0.90 \leq a \leq 1.8$).

In the above chemical formulas, A may be Ni, Co, Mn, and/or a (e.g., any suitable) combination thereof; X may be Al, Ni, Co, Mn, Cr, Fe, Mg, Sr, V, a rare earth element, and/or a (e.g., any suitable) combination thereof; D may be O, F, S, P, and/or a (e.g., any suitable) combination thereof; G may be Al, Cr, Mn, Fe, Mg, La, Ce, Sr, V, and/or a (e.g., any suitable) combination thereof; and $L^1$ may be Mn, Al, and/or a (e.g., any suitable) combination thereof.

The positive electrode active material may be, for example, a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and may be applied to a high-capacity, high-density rechargeable lithium battery.

## Negative Electrode 20

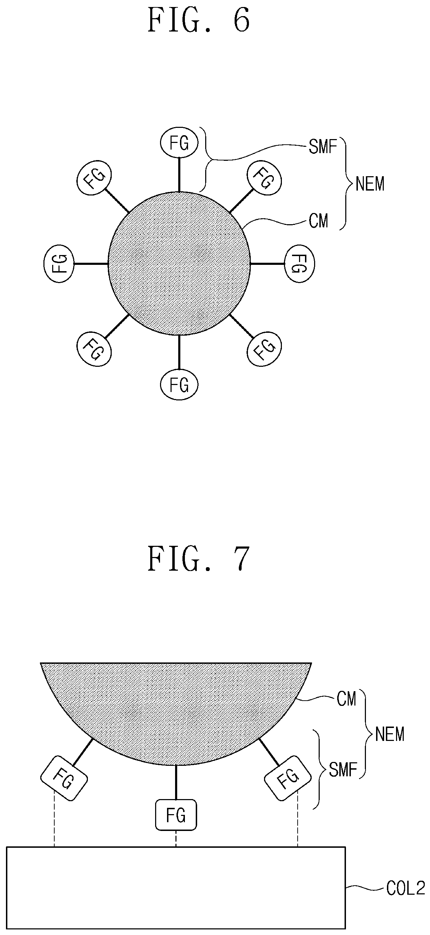

The negative electrode 20 for a rechargeable lithium battery includes a current collector COL2 and a negative electrode active material layer AML2 positioned on the current collector COL2. The negative electrode active material layer AML2 may include a negative electrode active material, and may further include a binder and/or a conductive material. The current collector COL2 may be selected from among a copper foil, a nickel foil, a stainless-steel foil, a titanium foil, a nickel foam, a copper foam, a polymer substrate coated with a conductive metal, and/or a (e.g., any suitable) combination thereof. The negative electrode active material layer AML2 will be described in more detail with reference to FIGS. 6 to 8.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, a multilayer film of two or more layers thereof, and a mixed multilayer film such as a polyethylene/polypropylene two-layer separator (e.g., a separator that has a two-layer structure including a layer of polyethylene and a layer of polypropylene), a polyethylene/polypropylene/polyethylene three-layer separator (e.g., a separator that has a three-layer structure including a layer of polyethylene, a layer of polypropylene, and a layer of polyethylene), a polypropylene/polyethylene/polypropylene three-layer separator (e.g., a separator that has a three-layer structure including a layer of polypropylene, a layer of polyethylene, and a layer of polypropylene), and/or the like.

The separator 30 may include a porous substrate and a coating layer including an organic material, an inorganic material, and/or a (e.g., any suitable) combination thereof on a surface (e.g., one or both surfaces (e.g., opposite surfaces)) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoro 1 ethylene (PTFE, e.g., TEFLON®), and/or a copolymer or mixture of two or more thereof.

The organic material may include a polyvinylidene fluoride-based polymer and/or a (meth)acrylic polymer.

The inorganic material may include (e.g., be in a form of inorganic particles) and may include (e.g., may be) one or more materials selected from among $Al_2O_3$, $SiO_2$, $TiO_2$, $SnO_2$, $CeO_2$, MgO, NiO, CaO, GaO (e.g., $Ga_2O_3$), ZnO, $ZrO_2$, $Y_2O_3$, $SrTiO_3$, $BaTiO_3$, $Mg(OH)_2$, boehmite, and/or a (e.g., any suitable) combination thereof. However, the present disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like. The aprotic solvent may include nitriles, such as R-CN (where R may be a C2 to C20 linear, branched, or cyclic hydrocarbon group, a double bond, an aromatic ring, or an ether bond), and/or the like; amides, such as dimethylformamide; dioxolanes such as 1,3-dioxolane, 1,4-dioxolane, and/or the like; sulfolanes; and/or the like.

The non-aqueous organic solvent may be utilized alone or in combination of two or more non-aqueous organic solvents.

In addition, if (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Non-limiting examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y may be integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and/or lithium bis(oxalato) borate (LiBOB).

**Rechargeable** Lithium Battery

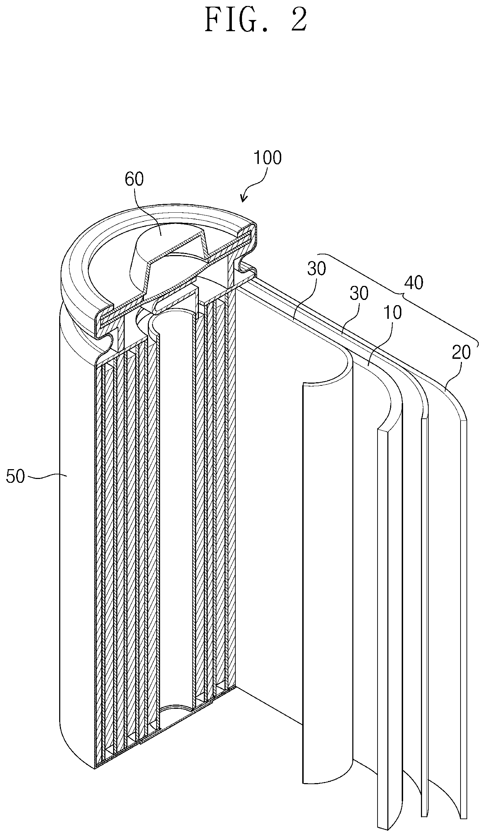

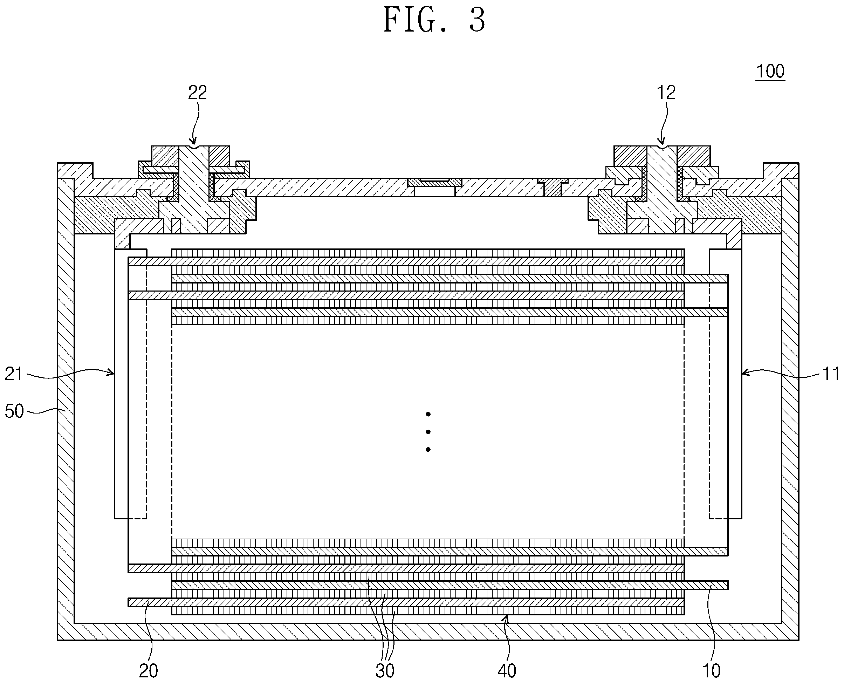

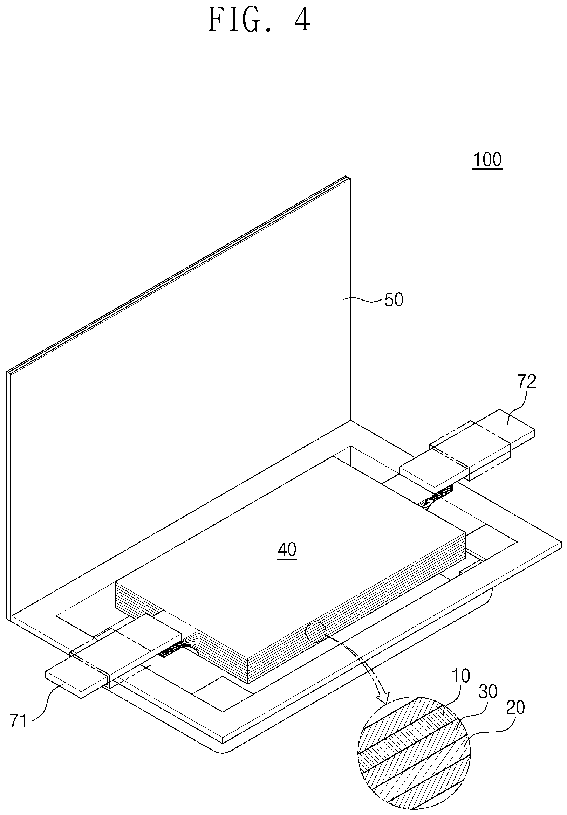

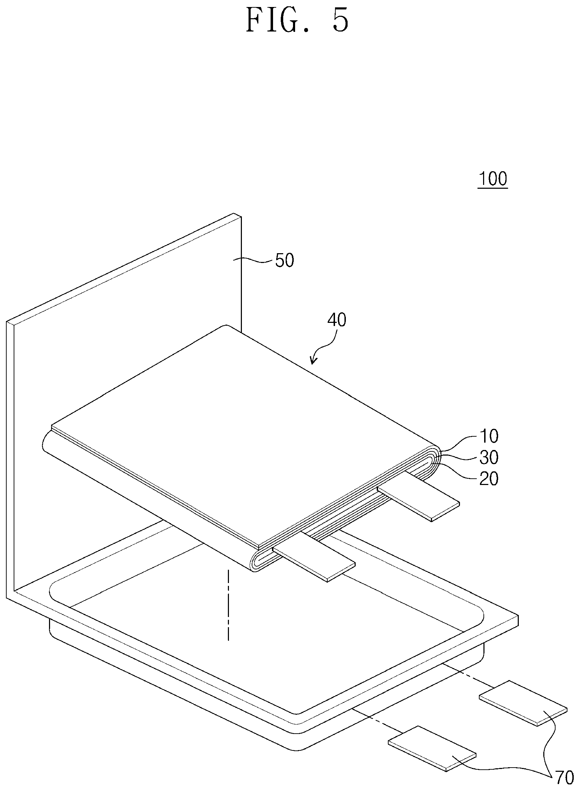

The rechargeable lithium battery may be classified into cylindrical, prismatic, pouch, coin-type (kind) batteries, and/or the like depending on their shape. FIGS. 2 to 5 are schematic views each illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive electrode lead tab 11, a positive terminal 12, a negative electrode lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

FIG. 6 is a cross-sectional view of a negative electrode active material according to one or more embodiments of the present disclosure. FIG. 7 is a conceptual diagram illustrating chemical interaction between a negative electrode active material and a negative electrode current collector according to one or more embodiments of the present disclosure. Hereinafter, referring to FIGS. 6 and 7, a negative electrode active material for a rechargeable lithium battery according to the present disclosure, a negative electrode including the same, and a rechargeable lithium battery including the same will be described in more detail.

**Negative Electrode Active Material**

Referring to FIG. 6, a negative electrode active material NEM according to one or more embodiments of the present disclosure may include a carbon-based material CM, and a surface modifier SMF on a surface of the carbon-based material CM.

The carbon-based material CM may be a material capable of reversibly intercalating/deintercalating lithium ions, and may include, for example, crystalline carbon, amorphous carbon, and/or a (e.g., any suitable) combination thereof. The crystalline carbon may be graphite, such as non-shaped, plate-shaped, flake-shaped, sphere-shaped, or fiber-shaped natural graphite or artificial graphite, and Non-limiting examples of the amorphous carbon may include soft carbon or hard carbon, a mesophase pitch carbide, calcined cokes, and/or the like.

In one or more embodiments, the carbon-based material CM may include amorphous hard carbon. Hard carbon may not only have almost no volume expansion during charging and discharging, but also have excellent or suitable electrical conductivity and mobility of lithium ions, and therefore, if (e.g., when) the carbon-based material CM includes the hard carbon, the negative electrode active material may have improved conductivity and lifespan characteristics.

The carbon-based material CM may be in a form of particles having an average particle diameter ($D_{50}$) of about 0.5 μm to about 30 μm, about 1 μm to about 20 μm, or about 1 μm to about 15 μm. The average particle diameter may be measured utilizing a particle size analyzer, and/or measured utilizing a transmission electron microscope image.

The surface modifier SMF may include a polar functional group FG. The polar functional group FG may include an unshared electron pair. For example, the polar functional group FG may include at least one of a carboxyl group, an amine group, a thiol group, and/or a (e.g., any suitable) combination thereof. The polar functional group FG on a surface of the negative electrode active material may be detected through X-ray photoelectron spectroscopy (XPS), nuclear magnetic resonance (NMR), Raman spectroscopy, infrared spectroscopy (FT-IR), and/or the like.

The surface modifier SMF may be an organic compound, and may have a molecular weight (Mw) of about 30 g/mol to about 100 g/mol, or about 50 g/mol to about 80 g/mol. If (e.g., when) the surface modifier SMF is a compound with the low molecular weight as described above, the surface modifier SMF may be uniformly (e.g., substantially uniformly) formed on the surface of the carbon-based material CM.

In this specification, the molecular weight may be the mass of a molecule expressed in grams, representing the mass of a material containing 1 mole (about $6.022 \times 10^{23}$) of the molecule. The molecular weight may be measured utilizing a mass spectrometer, a gas density measurement, cryoscopy, and/or the like.

According to one or more embodiments of the present disclosure, an amount of the surface modifier SMF in the negative electrode active material NEM may be about 1.0 wt% or less on the basis of the total 100 wt% of the negative electrode active material NEM. For example, the amount of the surface modifier may be about 0.01 wt% to about 1.0 wt%, or about 0.1 wt% to about 0.5 wt% based on a total weight (10 wt%) of the negative electrode active material NEM. If (e.g., when) the amount of the surface modifier SMF falls within the above-described range, effects to be described in more detail later may be achieved without decrease in capacity of the negative electrode.

The amount of the surface modifier SMF in the negative electrode active material NEM may be measured through inductively coupled plasma mass spectrometry (ICP-MS), thermogravimetric analysis (TGA), X-ray photoelectron spectroscopy (XPS), and/or the like, but one or more embodiments of the present disclosure are not limited thereto.

Because the surface modifier SMF according to one or more embodiments of the present disclosure includes the polar functional group FG, the bonding force between the negative electrode active material NEM and the negative electrode current collector COL2 may be improved, the electrical conductivity of the negative electrode active material layer AML2 and the wettability of an electrolyte solution may be improved, and fast-charging performance of a battery may be improved.

In particular, referring to FIG. 7, because the polar functional group FG, included in the negative electrode active material NEM forms chemical bonding with the negative electrode current collector COL2, the bonding force between the negative electrode active material NEM and the negative electrode current collector COL2 may be improved. As previously described, the polar functional group FG may include the unshared electron pair, where the unshared electron pair may form a coordination bond with metal positive ions of the negative electrode current collector, so that the negative electrode active material NEM may be chemically bonded to the negative electrode current collector COL2.

For example, a sulfur (S) element included in a thiol group of the polar functional group FG may have two unshared electron pairs, and at least one of the two unshared electron pairs may form a coordination bond with metal ions (for example, $Cu^{2+}$) of the negative electrode current collector COL2 to thereby bond the negative electrode active material NEM to the negative electrode current collector COL2. In addition, one unshared electron pair included in a nitrogen (N) element of an amine group may form a coordination bond with metal ions (for example, $Cu^{2+}$) of the negative electrode current collector COL2 to thereby bond the negative electrode active material NEM to the negative electrode current collector COL2.

Negative Electrode Active Material Layer

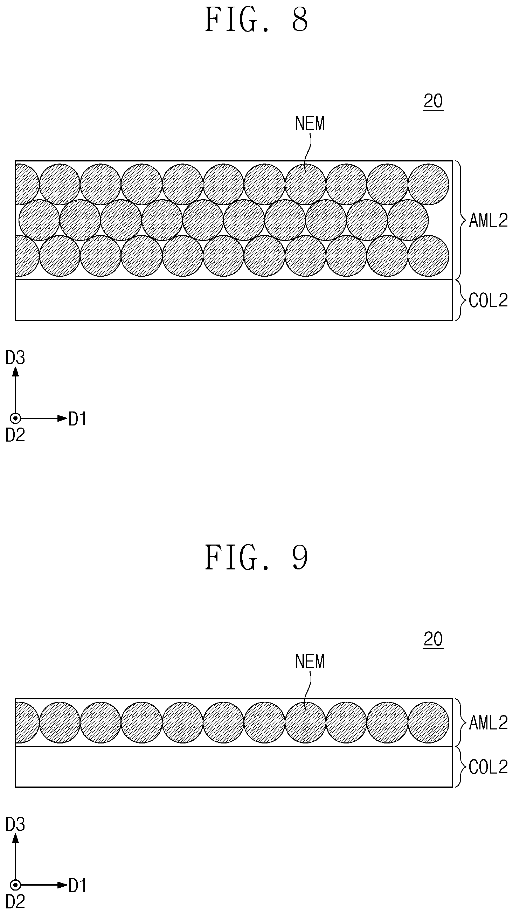

FIGS. 8 and 9 are cross-sectional views of a negative electrode for a rechargeable lithium battery according to one or more embodiments of the present disclosure. Referring to FIGS. 8 and 9, the negative electrode according to one or more embodiments of the present disclosure may include a negative electrode active material NEM. A negative electrode active material layer AML2 according to one or more embodiments of the present disclosure may not include (e.g., may exclude) a binder, or may include relatively small (e.g., very small) amounts of the binder. Because the negative electrode active material NEM according to the present disclosure may form chemical bonding with a negative electrode current collector COL2, the negative electrode active material NEM and the negative electrode current collector COL2 may have sufficient bonding force even though the binder is included only in small amounts, or is not included at all.

The amount of the binder in the negative electrode active material layer AML2 may be about 0.5 wt% or less on the basis of 100 wt% total weight of the negative electrode active material layer AML2. For example, the amount of the binder may be about 0 wt% to about 0.5 wt%, or about 0 wt% to about 0.1 wt%, based on a total weight (100 wt%) of the negative electrode active material layer AML2.

The type (kind) of the binder that may be included in the negative electrode active material layer AML2 is not particularly limited, and may include a non-aqueous binder, an aqueous binder, a dry binder, and/or a (e.g., any suitable) combination thereof. Non-limiting examples of the binder may include at least one of a styrene-butadiene rubber, a (meth) acrylated styrene-butadiene rubber, a (meth)acrylonitrile-butadiene rubber, a (meth)acrylic rubber, a butyl rubber, a fluoro rubber, polyvinylchloride, carboxylated polyvinylchloride, polyvinyl fluoride, an ethylene propylene copolymer, polystyrene, polyurethane, polytetrafluoroethylene, polyvinylidene fluoride, polyethylene, polypropylene, polyamideimide, and/or a (e.g., any suitable) combination thereof.

In a case where the negative electrode active material layer AML2 includes the binder only in relatively small (e.g., very small) amounts, or does not include the binder, electrical conductivity of the negative electrode active material layer AML2 may be improved. The binder, mainly serving as an insulator, may hinder movement of electrons, and if (e.g., when) the amount of this binder decreases, a movement path of the electrons in the negative electrode active material NEM may be improved, thereby improving the electrical conductivity. The improvement of the electrical conductivity may result in improving the charging speed of a battery.

In the case where the negative electrode active material layer AML2 includes the binder only in relatively small (e.g., very small) amounts, or does not include the binder, the negative electrode active material layer AML2 may have an improved capacity. If (e.g., when) the amount of the binder decreases, the proportion of the negative electrode active material NEM included in the negative electrode active material layer AML2 may relatively increase, and accordingly, the capacity of the negative electrode active material layer AML2 may be increased.

The negative electrode active material layer AML2 according to one or more embodiments of the present disclosure has excellent or suitable electrical conductivity because the amount of the binder is low, and the polar functional group FG existing on the surface of the negative electrode active material NEM may facilitate the movement of the electrons. Therefore, the negative electrode active material layer AML2 may not include (e.g., may exclude) a (e.g., any) separate conductive material, or may only include the conductive material in small amounts.

The amount of the conductive material in the negative electrode active material layer AML2 may be about 1 wt% or less on the basis of 100 wt% total weight of the negative electrode active material layer AML2. For example, the amount of the conductive material may be about 0 wt% to about 1 wt%, or about 0 wt% to about 0.1 wt% based on a total weight (100 wt%) of the negative electrode active material layer AML2.

The type (kind) of the conductive material that may be included in the negative electrode active material layer AML2 is not particularly limited, and non-limiting examples of the conductive material may include at least one of a carbon-based material such as natural graphite, artificial graphite, carbon black, acetylene black, Ketjen black, a carbon fiber, a carbon nanofiber, and a carbon nanotube; a metal-based material containing copper, nickel, aluminum, silver, and/or the like, in a form of a metal powder or a metal fiber; a conductive polymer such as a polyphenylene derivative; and/or a (e.g., any suitable) combination thereof.

The negative electrode active material layer AML2 including the negative electrode active material NEM, according to one or more embodiments of the present disclosure, may have excellent or suitable wettability with an electrolyte solution. Referring to FIG. 1, as previously described, the electrolyte solution may include a non-aqueous organic solvent such as a carbonate-based, ester-based, ether-based, ketone-based, or alcohol-based solvent, an aprotic solvent, and/or a (e.g., any suitable) combination thereof. The non-aqueous organic solvent, as previously described, may be mainly a polar solvent, and in a case where the negative electrode active material NEM includes the polar functional group FG, affinity between an electrolyte solution and the negative electrode active material NEM may be improved, thereby improving the wettability between the negative electrode active material layer AML2 and the electrolyte solution.

The improvement in wettability may allow an electrolyte to spread well over the surface of the negative electrode active material NEM, and may thus expand an ion conduction path, and facilitate the movement of lithium ions. If (e.g., when) the electrolyte is dispersed evenly on the surface of the negative electrode active material NEM, a substantially uniform and stable solid electrolyte interface (SEI) may be formed on a surface of the negative electrode 20. This may contribute to life extension of the negative electrode 20.

FIG. 8 is a cross-sectional view of a negative electrode for a rechargeable lithium battery according to one or more embodiments of the present disclosure, which illustrates a negative electrode active material layer AML2 including a multi-layer negative electrode active material NEM. The negative electrode active material layer AML2 including the multi-layer negative electrode active material NEM is a general shape of a negative electrode 20, and in case of preparing the negative electrode 20 in a generally suitable method, the negative electrode active material layer AML2 in the above-described shape may be obtained.

In this specification, including the multi-layer negative electrode active material may refer to that the negative electrode active material layer includes two or more layers of the negative electrode active material layer in a thickness direction D3 of the negative electrode active material layer. For example, the negative electrode active material layer may include first and second negative electrode active material layers, the first negative electrode active material layer may include first negative electrode active materials directly in contact with a negative electrode current collector, and the second negative electrode active material layer may include second negative electrode active materials formed on the first negative electrode active materials. In one or more embodiments, including the multi-layer negative electrode active material may refer to that the thickness of the negative electrode active material layer AML2 is at least twice the average particle diameter of the negative electrode active material NEM.

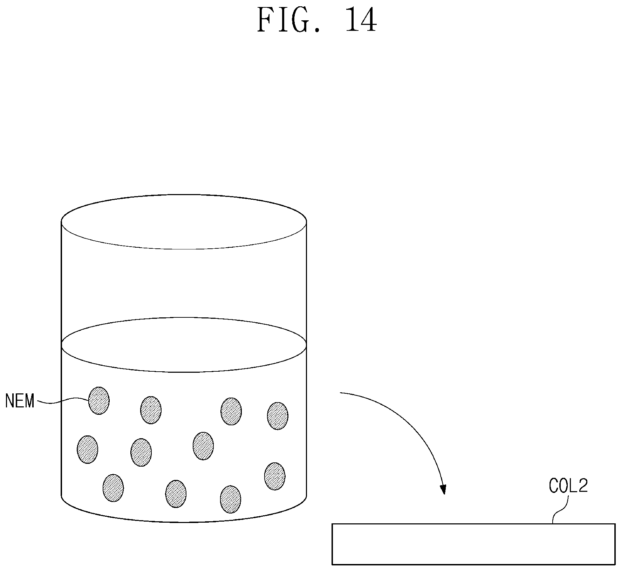

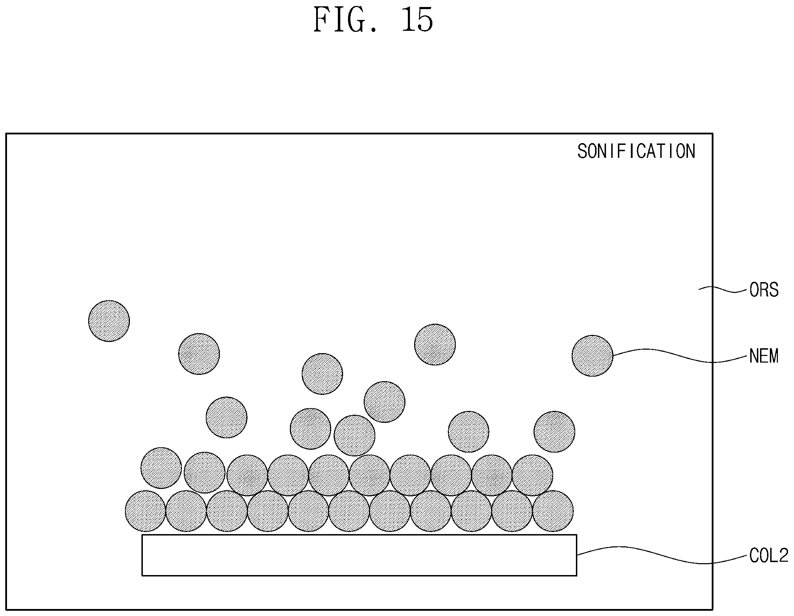

FIG. 9 is a cross-sectional view of a negative electrode for a rechargeable lithium battery according to one or more embodiments of the present disclosure, which illustrates a negative electrode active material layer AML2 including a single-layer negative electrode active material NEM. As previously described, the negative electrode active material NEM according to the present disclosure may be chemically bonded to the negative electrode current collector COL2, and due to the chemical bonding, the negative electrode active material layer AML2 including the single-layer negative electrode active material NEM may be suitably prepared. A preparation method of the negative electrode active material layer AML2 will be described in more detail later with reference to FIGS. 14 and 15.

In this specification, including the single-layer negative electrode active material may refer to that the negative electrode active material layer includes only one layer of negative electrode active material particles in the thickness direction D3 of the negative electrode active material layer. For example, one layer of the negative electrode active material layer may only include negative electrode active material particles directly in contact with the negative electrode current collector. In one or more embodiments, in this specification, including the single-layer negative electrode active material may refer to that the thickness of the negative electrode active material layer AML2 is less than twice the average particle diameter of the negative electrode active material NEM.

The thickness of the single-layer negative electrode active material layer AML2, illustrated in FIG. 9, may be about 1 to about 1.9 times of the average particle diameter of the negative electrode active material NEM. For example, the thickness of the single-layer negative electrode active material layer AML2 may be about 0.5 $\mu$m to about 57 $\mu$m.

If (e.g., when) the negative electrode 20 includes the single-layer negative electrode active material NEM, fast-charging performance of a battery may be improved. Because the negative electrode 20 includes only one layer of the active material NEM, the travel distance of ions and electrons in the negative electrode 10 may become shorter, and the lithium ions may be evenly dispersed, so that the fast charging of the battery may be possible. Furthermore, because the negative electrode active material layer AML2 according to the present disclosure includes the binder in small amounts, or does not include the binder at all, excellent or suitable electrical conductivity may be exhibited, and accordingly, the fast-charging function may be further improved.

**Preparation Method of Negative Electrode**

Hereinafter, a preparation method of a negative electrode for a rechargeable lithium battery according to one or more embodiments of the present disclosure will be described. According to one or more embodiments of the present disclosure, the preparation method of the negative electrode for a rechargeable lithium battery includes preparing a negative electrode current collector; preparing a negative electrode active material; and forming a negative electrode active material layer containing the negative electrode active material on the negative electrode current collector.

First, the preparing of the negative electrode current collector may include preparing at least one among a copper foil, a nickel foil, a stainless-steel foil, a titanium foil, a nickel foam, a copper foam, a polymer substrate coated with conductive metal, and/or a (e.g., any suitable) combination thereof.

The preparing of the negative electrode active material may include soaking a carbon-based material in a first solution to perform a first surface modification, and soaking the first surface-modified carbon-based material in a second solution to perform a second surface modification.

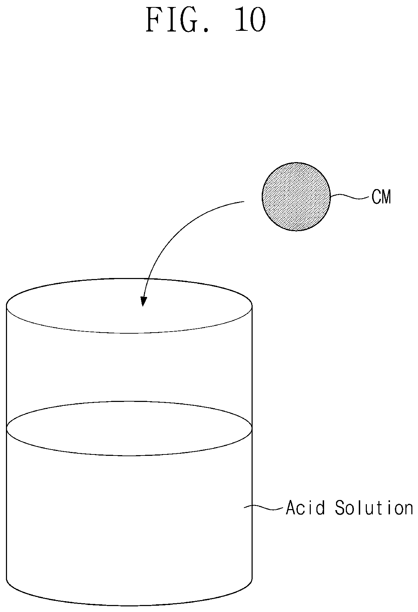

Referring to FIG. 10, the performing of the first surface modification on the carbon-based material CM may include soaking the carbon-based material CM in a strong acid solution to form a carbon-based material in which a primary functional group is formed. If (e.g., when) the carbon-based material CM is soaked in the strong acid solution containing nitric acid ($HNO_3$), sulfuric acid ($H_2SO_4$), and/or the like, at least some of C-C single bonds and/or C=C double bonds, present on a surface of the carbon-based material CM, may be broken. The nitric acid or sulfuric acid may act on a carbon portion where the bond is broken, so that a carboxyl group (-COOH) may be formed as the primary functional group.

According to one or more embodiments of the present disclosure, the first surface modification may be performed at a temperature of about 40 °C to about 80 °C. For example, the temperature at which the first surface modification is performed may be about 60 °C. The first surface modification may be carried out for about 10 minutes to about 1 hour. For example, the soaking time in the step (e.g., act or task) of performing the first surface modification may be about 30 minutes.

Before proceeding to the performing of the second surface modification on the first surface-modified carbon-based material, an intermediate step (e.g., act or task) may further be performed to lower the activation energy for reaction of the second surface modification. For example, to process the reaction of the second surface modification more smoothly, the intermediate step (e.g., act or task) may further be performed.

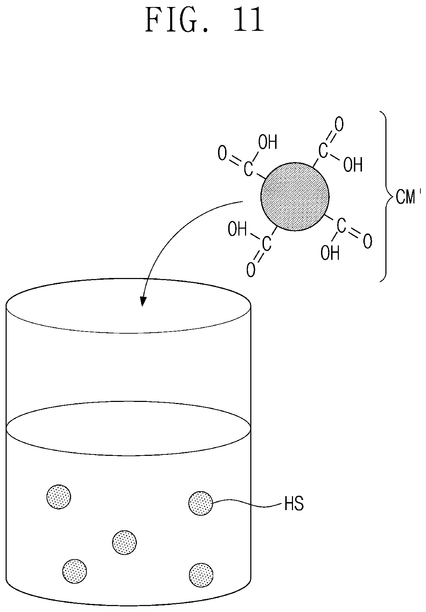

Referring to FIG. 11, the intermediate step (e.g., act or task) may include soaking a carbon-based material CM' having a carboxyl group (-COOH) in an organic solvent containing a halogen source HS, so that a hydroxyl group (-OH) of the carboxyl group (-COOH) is substituted with a halogen element such as chlorine (Cl) and/or bromine (Br).

For example, the intermediate step (e.g., act or task) may include soaking the first surface-modified carbon-based material CM' in the organic solvent containing thionyl chloride ($SOCl_2$) to form a carbon-based material containing acyl chloride ($-COCl_2$). The organic solvent may include dimethyl formamide, toluene, dimethyl carbonate, acetone, xylene, tetrahydrofuran, and/or a (e.g., any suitable) combination thereof, but one or more embodiments of the present disclosure are not limited thereto. The intermediate step (e.g., act or task) may be performed for about 2 hours in a reflux condition.

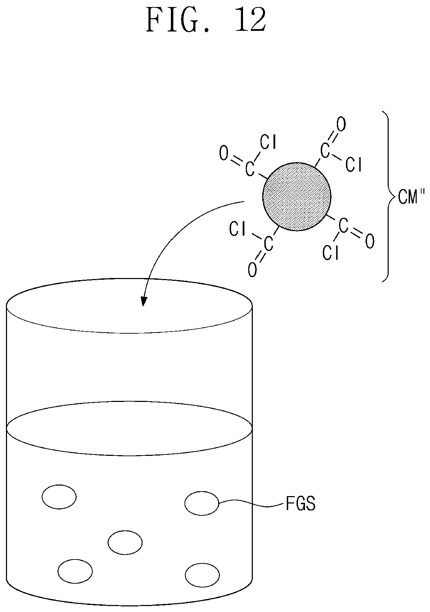

Referring to FIG. 12, the performing of the second surface modification on the carbon-based material may include soaking the carbon-based material in the second solution to form a functional group containing at least one of an amine group, a thiol group, and/or a (e.g., any suitable) combination thereof on a surface of the carbon-based material. The second solution may include a raw material FGS of a polar functional group, and may include, for example, an amine-based compound, a thiol-based compound, and/or a (e.g., any suitable) combination thereof.

The carbon-based material to be added in the step (e.g., act or task) of performing the second surface modification may be the carbon-based material CM" containing acyl chloride ($-COCl_2$), or although not illustrated in FIG. 12, may also be the carbon-based material CM' containing a carboxyl group (-COOH). If (e.g., when) the carbon-based material CM' or CM" containing the functional group as previously described is soaked in the second solution, a hydroxyl group of the carboxyl group or chlorine of the acyl chloride group may be substituted with a functional group containing an amine group and/or thiol group.

The raw material FGS of the polar functional group, contained in the second solution, may be, for example, cysteamine, ethylenediamine, mercapto methane, and/or the like, but one or more embodiments of the present disclosure are not limited thereto. A solvent of the second solution may be an organic solvent. The organic solvent may include dimethyl formamide, toluene, dimethyl carbonate, acetone, xylene, tetrahydrofuran, and/or a (e.g., any suitable) combination thereof, but one or more embodiments of the present disclosure are not limited thereto.

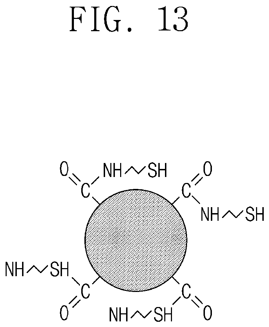

In one or more embodiments, the second solution may include cysteamine as the raw material FGS of the polar functional group, and include tetrahydrofuran as the organic solvent. If (e.g., when) the second solution has the above-described composition, a functional group, represented by - CONHSH, may be formed on the surface of the carbon-based material (see FIG. 13).

According to one or more embodiments of the present disclosure, the second surface modification may be performed at a temperature of about 60 °C to about 200 °C. For example, the temperature at which the second surface modification is performed may be about 80 °C. The second surface modification may be carried out for about 1 hour to about 10 hours. For example, the soaking time in the step (e.g., act or task) of performing the second surface modification may be about 3 hours.

Referring to FIG. 14, the forming of the negative electrode active material layer may include dissolving the prepared negative electrode active material NEM in an organic solvent to prepare an active material solution, applying the negative electrode active material solution onto the negative electrode current collector COL2 to form a preliminary negative electrode active material layer, and drying the preliminary negative electrode active material layer. The application process may be performed utilizing a doctor blade.

The negative electrode active material NEM contained in the negative electrode active material solution may be included in the amount of about 10 wt% to about 55 wt% on the basis of (e.g., based on) 100 wt% total weight of the solution. A solvent of the negative electrode active material solution may include dimethyl formamide, toluene, dimethyl carbonate, acetone, xylene, tetrahydrofuran, and/or a (e.g., any suitable) combination thereof, but one or more embodiments of the present disclosure are not limited thereto.

In a general preparation method of the negative electrode active material layer, mixing the negative electrode active material in a binder solution to prepare a negative electrode active material slurry. Because the negative electrode active material layer according to one or more embodiments of the present disclosure does not need to include a binder, the step (e.g., act or task) of preparing the slurry as above may not be provided. For example, the negative electrode active material layer according to one or more embodiments of the present disclosure may be formed only by applying the negative electrode active material solution, prepared as described above, onto the negative electrode current collector COL2 without the preparing of the negative electrode active material slurry.

The negative electrode active material layer, prepared in the above-described method, may include a multi-layer negative electrode active material NEM. To form a negative electrode active material layer including a single-layer negative electrode active material NEM, an additional process of ultrasonic treatment may be performed.

Referring to FIG. 15, the ultrasonic treatment may be performed under an organic solvent ORS such as dimethyl formamide, toluene, dimethyl carbonate, acetone, xylene, tetrahydrofuran, and/or a (e.g., any suitable) combination thereof.

In case of preparing the negative electrode including the multi-layer negative electrode active material in the above-described organic solvent ORS and performing the ultrasonic treatment, remaining negative electrode active materials, excluding (e.g., not including) the one layer of the negative electrode active material layer directly in contact with the negative electrode current collector COL2, may be separated from the current collector COL2 and dissolved in the solvent. The one layer of the negative electrode active material directly in contact with the negative electrode current collector COL2 may form chemical bonding with the negative electrode current collector COL2 to have strong adhesion, and may thus not be separated from the current collector COL2 despite the ultrasonic treatment.

As previously described, because the negative electrode active material according to the present disclosure has strong adhesion to the negative electrode current collector COL2, the negative electrode including the single-layer negative electrode active material layer may be prepared only by performing a simple ultrasonic treatment.

Hereinafter, disclosure will be described in more detail with reference to examples. However, the following examples are merely presented to exemplify the present disclosure, and the scope of the present disclosure is not limited thereto.

Example

Preparation of Negative Electrode Active Material

Hard carbon having an average particle diameter of about 5 μm was prepared as a carbon-based material. For a first surface modification, nitric acid and sulfuric acid were dissolved in distilled water to prepare a first solution. The hard carbon was soaked in the first solution, and agitated at about 60 °C for about 30 minutes to prepare a carbon-based material including a carboxyl group on a surface.

Thionyl chloride ($SOCl_2$) was added to a dimethyl formamide solvent to prepare an intermediate-step (e.g., act or task) solution. The carbon-based material including the carboxyl group was soaked in the solution for about 2 hours in a reflux condition to prepare a carbon-based material including acyl chloride ($-COCl_2$).

For a second surface modification, cysteamine was added to a toluene solvent to prepare a second solution. The carbon-based material including the acyl chloride ($-COCl_2$) was soaked in the second solution, and agitated at about 80 °C for about 3 hours to prepare a carbon-based material including both (e.g., simultaneously) of an amino group and thiol group on a surface, which is a negative electrode active material. A functional group formed on the surface of the carbon-based material may be represented by -CONHSH.

Preparation of Negative Electrode

A copper foil having a thickness of about 10 $\mu$m was prepared as a negative electrode current collector. The prepared negative electrode active material was dissolved in a tetrahydrofuran solvent to prepare a negative electrode active material solution including the negative electrode active material in the amount of about 40 wt%.

The negative electrode active material solution was applied onto the copper current collector utilizing a doctor blade, and dried to form a multi-layer negative electrode active material layer on the current collector. An ultrasonic treatment was performed on a preliminary negative electrode including the multi-layer negative electrode active material layer under a tetrahydrofuran solvent to prepare a negative electrode including a single-layer negative electrode active material layer.

Preparation of Rechargeable Lithium Battery

A solution of a positive electrode active material ($LiNi_{0.6}Co_{0.2}Mn_{0.2}O_2$), a carbon conductive material (Super P®), and a polyvinylidene fluoride (PVDF) binder was added, and mixed to prepare an active material slurry. In the active material slurry, the mixed weight ratio of the active material: the conductive material: the binder was about 98:1:1. The active material slurry was applied onto both sides (e.g., opposite sides) of an aluminum current collector, having a thickness of about 12 $\mu$m, utilizing a thick-film coating machine, dried at about 120 °C for about 1 hour or more, and then pressed to prepare a primary positive electrode plate.

The prepared negative electrode, a PTFE separator, and a positive electrode were stacked to prepare a rechargeable lithium battery. $LiPF_6$ with about 1.5 M dissolved in a mixed solvent of ethylene carbonate (EC): ethylmethyl carbonate (EMC): diethyl carbonate (DEC) in a volume ratio of about 3:5:2 was utilized as an electrolyte to prepare a CR2032-type (kind) coin full cell.

In summary, for example, hard carbon particles with an average diameter of about 5 $\mu$m were prepared as the carbon-based material. For the first surface modification, nitric acid and sulfuric acid were dissolved in distilled water to create a solution. The hard carbon was soaked in this solution and agitated at 60 °C for 30 minutes, resulting in a carbon-based material with carboxyl groups on its surface. Thionyl chloride was then added to a dimethyl formamide solvent to prepare an intermediate solution. The carbon-based material with carboxyl groups was soaked in this solution under reflux conditions for 2 hours, forming acyl chloride groups. For the second surface modification, cysteamine was added to a toluene solvent to create another solution. The carbon-based material with acyl chloride groups was soaked in this solution and agitated at 80 °C for 3 hours, resulting in a carbon-based material with both amino and thiol groups on its surface, forming the negative electrode active material. This active material was then dissolved in tetrahydrofuran to create a solution with 40 wt% active material. This solution was applied to a 10 $\mu$m thick copper foil utilizing a doctor blade and dried to form a multi-layer negative electrode active material layer. Finally, ultrasonic treatment in tetrahydrofuran was performed to achieve a single-layer negative electrode active material layer on the copper current collector. The prepared negative electrode, a PTFE separator, and a positive electrode were stacked to prepare a rechargeable lithium battery. $LiPF_6$ with about 1.5 M dissolved in a mixed solvent of ethylene carbonate (EC), ethylmethyl carbonate (EMC), and diethyl carbonate (DEC) in a volume ratio of about 3:5:2 was used as an electrolyte to prepare a CR2032-type coin cell.

**Comparative Example 1**

**Preparation of Negative Electrode Active Material**

Graphite powder (Japan carbon) was prepared as a negative electrode active material.

**Preparation of Negative Electrode**

The graphite powder (Japan carbon) as a negative electrode active material and/or a (e.g., any suitable) mixture of a styrene butadiene rubber (SBR) and carboxymethyl cellulose (CMC) in a weight ratio of about 1:1 were mixed in a weight ratio of about 98:2 to prepare a negative electrode active material slurry. The prepared negative electrode active material slurry was applied onto a copper foil current collector having a thickness of about 10 μm, and the coated electrode plate was dried at about 100 °C for about 1 hour or more to prepare a negative electrode.

**Preparation of Rechargeable Lithium Battery**

A rechargeable lithium battery was prepared in substantially the same method as that of Example 1 except that the negative electrode active material was graphite powder (Japan carbon) instead of the modified hard carbon, and the negative electrode active material slurry was prepared with a mixture of styrene butadiene rubber (SBR) and carboxymethyl cellulose (CMC) in a weight ratio of about 1:1.

**Comparative Example 2**

**Preparation of Negative Electrode Active Material**

Hard carbon, which had an average particle diameter of about 5 μm, and is not surface-modified, was prepared as a negative electrode active material.

**Preparation of Negative Electrode**

A copper foil having a thickness of about 10 μm was prepared as a negative electrode current collector. The prepared negative electrode active material was dissolved in a tetrahydrofuran solvent to prepare a negative electrode active material solution including the negative electrode active material in the amount of about 40 wt%.
The negative electrode active material solution was applied onto the copper current collector utilizing a doctor blade, and dried to form a multi-layer negative electrode active material layer on the current collector.

**Preparation of Rechargeable Lithium Battery**

A rechargeable lithium battery was prepared in substantially the same method as that of Example 1 except that the negative electrode active material was hard carbon that was not surface-modified.

**Evaluation Example 1**

To evaluate adhesion between the negative electrode active material layer and the current collector, peel strength of each of the negative electrodes prepared according to the example and comparative examples was measured, and the results were listed in Table 1. The evaluation method was as follows.
Each of the negative electrodes according to the example and comparative examples was cut into 25 mm X 100 mm to prepare test pieces, and utilizing a peel strength measurement instrument (manufacturer: KIPAE E&T, model: KP-M1T-s), the peel strength (N/m) at 180 ° was measured at about 25 °C with a peeling speed of about 50 mm/min and a measurement distance of about 50 mm.

**Evaluation Example 2**

To evaluate affinity between the negative electrode and an electrolyte, a contact angle of each of the negative electrodes prepared according to the example and comparative examples was measured, and the results were listed in Table 1. The evaluation method was as follows.
Through a contact angle analysis instrument (Phoenix 300, SEO, Suwon, South Korea), the contact angle of the negative electrode for a droplet of the electrolyte [$LiPF_6$ with about 1.5 M was dissolved in a mixed solvent of ethylene carbonate (EC): dimethyl carbonate (DMC): diethyl carbonate (DEC) in a volume ratio of about 3:2:5 was measured.

**Evaluation Example 3**

Resistance of electrode plate for each of the negative electrodes prepared according to the example and comparative examples was measured, and the results were listed in Table 1. The resistance of electrode plate was measured, utilizing an ohmmeter, as a resistance between 2 equally spaced points on a surface of the electrode plate.

**Evaluation Example 4**

A loading level of each of the negative electrodes prepared according to the example and comparative examples was measured in the following method, and the results were listed in Table 1.

The negative electrode plate prepared according to each of the example and comparative examples was cut into a square in the size of 50 mm x 50 mm, and the mass was measured to calculate the loading level therefrom according to Equation 1.

Equation 1

$$\text{Loading level (g/cm}^2\text{)} = \text{(weight of electrode plate - weight of current collector) (g) / area of negative}$$

$$\text{electrode (cm}^2\text{)}$$

**Evaluation Example 5**

Charging rate characteristics of each of the rechargeable lithium batteries prepared according to the example and comparative examples were evaluated in the following method, and the results were listed in Table 1.

The lithium batteries prepared according to the example and comparative examples were charged with constant current at about 0.1 C rate at about 25 °C until a voltage reached about 4.4 V (vs. Li), and then cut off at a current of about 0.05 C rate while about 4.4 V was maintained in a constant voltage mode. Next, the batteries were discharged with constant current at about 0.1 C rate until the voltage reached about 2.8 V (vs. Li) (formation cycle).

Charging and discharging were performed on the lithium batteries, which went through the formation cycle, once at about 0.2 C rate and once at about 2 C rate at about 25 °C. The ratio of the 2 C charge capacity to the 0.2 C charge capacity was taken as the charging rate characteristics.

Table 1

| Classification | Surface modifier | Negative electrode active material layer | Peel strength (kN/m) | Contact angle (°) | Electrode plate resistance ($\Omega$) | Loading level (g/cm$^2$) | Charge rate % |
|---|---|---|---|---|---|---|---|
| Example | -CONHSH | Single layer | 43.9 | 12 | 6.2 | 1.6 | 87 |
| Comparative Example 1 | None | Multi-layer | 2.3 | 28 | 520.6 | 7.0 | 24 |
| Comparative Example 2 | None | Multi-layer | 0.2 | 16 | 354.3 | 7.1 | 33 |

Referring to Table 1, it may be seen that the negative electrode prepared according to the example had a small contact angle, so that the affinity with the electrolyte solution was excellent or suitable. It may be seen that the negative electrode prepared according to the example had significantly higher peel strength than the negative electrodes according to Comparative Examples 1 and 2, so that the adhesion between the negative electrode current collector and the negative electrode active material layer was excellent or suitable, and the electrode plate resistance was low, so that the electrical conductivity was high. In addition, it may be seen that the negative electrode according to the example had an excellent or suitable loading level even through it included a single-layer negative electrode active material layer, and the rechargeable lithium battery according to the example had high charge rate.

Overall, the surface modifier includes the polar functional group that improve the bonding force between the negative electrode active material and the negative electrode current collector, such that the electrical conductivity of the negative electrode active material layer and the wettability of an electrolyte solution may be improved, and therefore, the fast-charging performance of a battery including the same may be improved. Furthermore, because the negative electrode active material layer almost includes no binder, the capacity and the electrical conductivity of the negative electrode active material layer may be improved.

According to one or more embodiments of disclosure, because a negative electrode for a rechargeable lithium battery includes a surface-modified negative electrode active material, the negative electrode may have improved electrical conductivity and electrolyte solution impregnation. Accordingly, the fast-charging performance of the rechargeable lithium battery may be improved.

According to one or more embodiments of disclosure, the negative electrode for the rechargeable lithium battery, having excellent or suitable electrical conductivity and electrolyte solution impregnation, may be prepared in a relatively simple process.

The battery, a battery management system in the battery, a manufacturing apparatuses thereof, or any other relevant apparatuses/devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

In the present disclosure, each suitable feature of the various embodiments of the disclosure may be combined or combined with each other, partially or entirely, and may be technically interlocked and operated in various suitable ways, and each embodiment may be implemented independently of each other or in conjunction with each other in any suitable manner unless otherwise stated or implied.

The above-described details are specific embodiments for carrying out the present disclosure. The present invention includes not only the above-described embodiments, but also embodiments changeable to a simple design or for ease of utilization. In addition, techniques for modified practice of one or more embodiments of the present disclosure may also be included. Therefore, the scope of the present disclosure should not be limited to the above-described embodiments, but should be determined by the claims and equivalents to be described herein.

## Claims

1. A negative electrode active material comprising:

   a carbon-based material; and
   a surface modifier on a surface of the carbon-based material,
   wherein the surface modifier comprises a polar functional group, and
   wherein the polar functional group comprises at least one of a carboxyl group, an amine group, a thiol group, or a combination thereof.

2. The negative electrode active material of claim 1, wherein the polar functional group comprises a thiol group.

3. The negative electrode active material of claim 1 or 2, wherein the surface modifier has a molecular weight (Mw) of about 30 g/mol to about 100 g/mol.

4. The negative electrode active material of any one of claims 1 to 3, wherein an amount of the surface modifier in the negative electrode active material is about 0.01 wt% to about 1.0 wt%, based on a total weight (100 wt%) of the negative electrode active material.

5. The negative electrode active material of any one of claims 1 to 4, wherein the carbon-based material comprises amorphous carbon, and
   wherein the amorphous carbon comprises at least one of soft carbon, hard carbon, mesophase pitch carbide, calcined cokes, or a combination thereof.

6. The negative electrode active material of any one of claims 1 to 5, wherein the carbon-based material is in a form of particles having an average particle diameter of about 1 $\mu$m to about 15 $\mu$m.

7. A negative electrode, comprising:

   a negative electrode current collector; and
   a negative electrode active material layer on the negative electrode current collector, and comprising a negative electrode active material,
   wherein the negative electrode active material comprises a surface modifier,
   wherein the surface modifier chemically bonds the negative electrode active material to a surface of the negative electrode current collector utilizing at least one of sulfur (S), nitrogen (N), or a combination thereof as a medium, and
   wherein the negative electrode is a negative electrode for a rechargeable lithium battery.

8. The negative electrode of claim 7, wherein the negative electrode active material further comprises a carbon-based material,

   wherein the surface modifier is on a surface of the carbon-based material,
   wherein the surface modifier comprises a polar functional group, and
   wherein the polar functional group comprises at least one of an amine group or a thiol group.

9. The negative electrode of claim 7 or 8, wherein the negative electrode active material layer further comprises a binder, and
   wherein an amount of the binder in the negative electrode active material layer is about 0.5 wt% or less based on a total weight (100 wt%) of the negative electrode active material.

10. The negative electrode of any one of claims 7 to 9, wherein the negative electrode active material layer comprises a single-layer negative electrode active material.

11. The negative electrode of any one of claims 7 to 10, wherein the negative electrode current collector is a Cu foil.

12. A method comprising:

   preparing a negative electrode current collector;
   preparing a negative electrode active material; and
   forming a negative electrode active material layer comprising the negative electrode active material on the negative electrode current collector,
   wherein the preparing of the negative electrode active material comprises:

      soaking a carbon-based material in a first solution to perform a first surface modification; and
      soaking the first surface-modified carbon-based material in a second solution to perform a second surface modification,

   wherein the first solution is an acid solution,
   wherein the second solution comprises at least one of an amine-based compound, a thiol-based compound, or a combination thereof, and
   wherein the method is a method for preparing a negative electrode for a rechargeable lithium battery.

13. The method of claim 12, wherein the negative electrode active material layer comprises a single-layer negative electrode active material.

14. The method of claim 12 or 13, wherein the forming of the negative electrode active material layer comprises:

   preparing an active material solution comprising the negative electrode active material;
   applying the active material solution onto the negative electrode current collector to form a preliminary negative electrode active material layer; and
   drying the preliminary negative electrode active material layer.

15. The method of claim 14, further comprising performing an ultrasonic treatment on the dried preliminary negative electrode active material layer.

# FIG. 1

# FIG. 2

# FIG. 3

EP 4 718 518 A1

# FIG. 4

# FIG. 5

100

50

40

10
30
20

70

# FIG. 6

# FIG. 7

# FIG. 8

<u>20</u>

NEM

AML2

COL2

D3

D2 → D1

# FIG. 9

<u>20</u>

NEM

AML2

COL2

D3

D2 → D1

# FIG. 10

CM

Acid Solution

# FIG. 11

# FIG. 12

FIG. 13

# FIG. 14

NEM

COL2

# FIG. 15

SONIFICATION

ORS

NEM

COL2

## EUROPEAN SEARCH REPORT

**Application Number**

EP 25 20 3001

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/070733 A1 (YAMADA SHUNSUKE [JP] ET AL) 22 March 2012 (2012-03-22) * paragraphs [0001], [0036], [0065] - [0085], [0090] - [0093]; claims 1-7 * ----- | 1-15 | INV. H01M4/133 C01B32/21 H01M4/1393 H01M4/587 H01M10/0525 |
| X | JP H10 284080 A (MITSUBISHI CHEM CORP) 23 October 1998 (1998-10-23) * paragraphs [0021] - [0027]; claims 1-9 * ----- | 1,6-9 | |

TECHNICAL FIELDS SEARCHED (IPC)

H01M
C01B

The present search report has been drawn up for all claims

| Place of search | Date of completion of the search | Examiner |
|---|---|---|
| Munich | 31 January 2026 | Szekely, Noemi Kinga |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 3001

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2026

| Patent document cited in search report | Publication date | Patent family member(s) | | Publication date |
|---|---|---|---|---|
| US 2012070733 A1 | 22-03-2012 | CN | 102326283 A | 18-01-2012 |
| | | EP | 2400586 A1 | 28-12-2011 |
| | | JP | 5625381 B2 | 19-11-2014 |
| | | JP | 2010219036 A | 30-09-2010 |
| | | KR | 20110118790 A | 01-11-2011 |
| | | US | 2012070733 A1 | 22-03-2012 |
| | | WO | 2010095716 A1 | 26-08-2010 |
| JP H10284080 A | 23-10-1998 | JP | 3633257 B2 | 30-03-2005 |
| | | JP | H10284080 A | 23-10-1998 |

EPO FORM P0459

For more details about this annex : see Official Journal of the European Patent Office, No. 12/82